# EUROPÄISCHE PATENTSCHRIFT

(11) **EP 1 900 571 B1**
(45) Veröffentlichungstag und Bekanntmachung des Hinweises auf die Patenterteilung: **07.12.2011**
(21) Anmeldenummer: 07017578.1
(22) Anmeldetag: 07.09.2007
(51) Int. Cl.: B60P 7/13, B60P 1/64

(54) **Vorrichtung zur Verriegelung eines Containers auf einem Fahrzeug**
Device for bolting a container to a vehicle
Dispositif destiné au verrouillage d'un conteneur sur un véhicule

(30) Priorität: 15.09.2006 DE 202006014395 U
(43) Veröffentlichungstag der Anmeldung: 19.03.2008
(73) Patentinhaber: 1. RMM Entwicklungsgesellschaft mbH & Co. KG, 21244 Buchholz i.d.N. (DE)
(72) Erfinder: Metternich, Heinz-Rüdiger, 21279 Eversen-Heide (DE)
(74) Vertreter: Hansen, Jochen

(56) Entgegenhaltungen:
- CA-A1- 2 365 983
- US-A- 5 575 599
- US-A- 5 613 814
- US-A1- 2003 034 654

## Beschreibung

Die Erfindung bezieht sich auf eine Vorrichtung zur Verriegelung eines Containers auf einem Fahrzeug, welches eine Tragplattform mit einer Mehrzahl von an vorgegebenen Stellen angeordneten Verriegelungspilzen aufweist, die beim Aufsetzen eines Containers von unten her in die unteren Langlöcher der Eckbeschläge eindringen.

Vorrichtungen zur Verriegelung von Containern auf Bahnfahrzeugen sind bekannt. Sie sind so ausgestaltet, dass eine Bedienungsperson den Verriegelungsvorgang von Hand durchführen muss.

Es sind auch Verriegelungen für Container auf Fahrzeugen bekannt, die diesen Verriegelungsvorgang selbsttätig ausführen können, wozu meistens Druckluft eingesetzt wird. Bei Straßenfahrzeugen ist dies deshalb unproblematisch, weil genügend Druckluftenergie zur Verfügung gestellt werden kann, wenn ein Container verriegelt oder entriegelt werden soll. Bei Bahnfahrzeugen ist diese Situation anders. Wenngleich auch dort Druckluftenergie zur Verfügung stände, so kann auf diese nicht zurückgegriffen werden, weil die Druckluft bestimmungsgemäß für die Bremsanlage vorgesehen ist und für weitere Anwendungszwecke nicht herangezogen werden darf. Hinzu kommt noch, dass Verriegelungs- und Entriegelungsvorgänge im Zusammenhang mit Transportcontainern auf der Bahn dort durchgeführt werden, wo keine Energiequellen zur Verfügung stehen.

Aus der US 5,575,599 ist eine Containerverriegelungsvorrichtung auf einem Fahrzeug bekannt, bei der ein horizontal verschiebbar gelagerter Verriegelungszapfen von der Seite her in den Eckbeschlag des aufgestellten Containers eingreift. Dabei wird die horizontale Verschubbewegung des Verriegelungszapfens über ein Hebelsystem von der Gewichtskraft des Containers übertragen. Diese Verriegelungsvorrichtung verzichtet dabei auf Verriegelungspilze, die beim Aufsetzen eines Containers von unten her in die unteren Langlöcher der Eckbeschläge eindringen.

Aus der CA 2 365 983 A1 ist ein Apparat zum automatischen Greifen und Sichern eines Cargobehälters auf einer Plattform bekannt, der beabstandete, um eine horizontale Achse von einer zurückgezogenen Stellung unterhalb einer Ladeplattform zu einer ausgefahrenen, in den Cargobehälter eingreifenden Position verschwenkbare Haken aufweist, wobei die Haken durch ein auf die Plattform auflaufenden Cargobehälter über einen Hebelmechanismus automatisch in die den Cargobehälter festhaltende Position aufgestellt werden. Die Rückstellung der Haken erfolgt über ein Fußpedal unterhalb der Plattform. Diese Vorrichtung ist für die Gepäckbeladung von Flugzeugen vorgesehen.

Die Erfindung will eine Containerverriegelung, insbesondere für Bahnfahrzeuge schaffen, bei der der Verriegelungsvorgang ohne weiteres durchgeführt werden kann, d. h. also keine Tätigkeit des Personals erforderlich ist.

Erreicht wird dies dadurch, dass jedem Verriegelungspilz 10 zur selbsttätigen Verriegelung folgende Elemente zugeordnet sind:
ein Betätigungshebel 44, der um eine horizontale Achse 12 verschwenkbar und mit einem kurzen Hebelarm 441 und einem etwa diametral gegenüberliegenden langen Hebelarm 442 ausgebildet ist,
der lange Hebelarm 442 in unbelasteter Position des Betätigungshebels 44 im Wesentlichen waagrecht auf einem Anschlag 112 aufruht,
das freie Ende des kurzen Hebelarmes 441 im Aufsetzbereich des Eckbeschlages 100 eines Containers angeordnet und sich unter Belastung durch einen Container waagerecht ausrichtet, und
eine Klaue 22 um die horizontale Achse 12 des Betätigungshebels 44 verschwenkbar und mit einem radial nach oben ragenden Schwenkteil 20 ausgebildet ist, an dessen freiem Ende ein in den Aufsetzbereich des Eckbeschlages 100 des Containers hineinragender Sperrteil 21 ausgebildet ist und an deren dem Sperrteil 21 gegenüberliegender Fläche das eine Ende einer Druckfeder 30 angreift, deren anderes Ende an dem freien Ende des langen Hebelarmes 442 des Betätigungshebels 40 angreift und Relatiwerschwenkungen zwischen dem Betätigungshebel 44 und der Klaue 22 beim Aufsetzen eines Containers 100 zulässt, wobei deren Sperrteil 21 in das seitliche Langloch 101 des Eckbeschlages eindringt und den Container nach dem Aufsetzen auf die Tragplattform verriegelt.

Bei der Verriegelung gemäß der Erfindung wird das Eigengewicht des Containers herangezogen, um den Verriegelungsvorgang durchzuführen. Nachdem ein Container auf einem Bahnfahrzeug erst einmal abgesetzt worden ist, ist er nach dem Absetzvorgang automatisch verriegelt worden, ohne das es weiterer Arbeiten des Personals bedürfte. Der Zug kann nach dem Absetzen des Containers mit seiner Fahrt beginnen und kann höhere Geschwindigkeiten erreichen, als dies bei Güterzügen bislang möglich ist, bei denen die Container nicht verriegelt sind, sondern nur auf den Verriegelungspilzen aufruhen.

Die Verriegelung gemäß der Erfindung ist in einer bevorzugten Ausführungsform klappbar ausgestaltet, so dass in der einen Position Container verriegelt werden können und in der anderen die Verriegelung aus dem Aufsetzbereich eines Containers herausgeschwenkt worden ist und eine Lage einnimmt, die das Lichtraumprofil des Fahrzeugs nicht überschreitet. Dies hat den Vorteil, dass auf einem Bahntragwagen viele Verriegelungen gemäß der Erfindung angeordnet werden können, die je nach Bedarf in die richtige Position geschwenkt werden, je nachdem ob nun 20'- oder 40' Fuß-Container geladen werden sollen.

Ein zusätzlicher Vorteil wird bei der Verriegelung gemäß der Erfindung dadurch erreicht, dass die Verriegelung auf solchen Montageklappen aufgebaut werden kann, die bislang bei einer Vielzahl von Bahntragwagen bereis verwendet werden, allerdings ohne kraft- und formschlüssige Verriegelung.

Die Erfindung wird nachstehend anhand der Zeichnungen beispielsweise erläutert.
Fig. 1 zeigt eine schaubildliche Ansicht auf eine Verriegelung gemäß der Erfindung von der rechten Seite her.
Fig. 2 zeigt die zu Fig. 1 entsprechende Darstellung von der linken Seite aus.
Fig. 3 zeigt eine Darstellung der Verriegelung gemäß der Erfindung in verringertem Maßstab entsprechend der Fig. 2.
Fig. 4 zeigt die zur Fig. 2 entsprechende Darstellung mit aufgesetztem verriegelten Container.

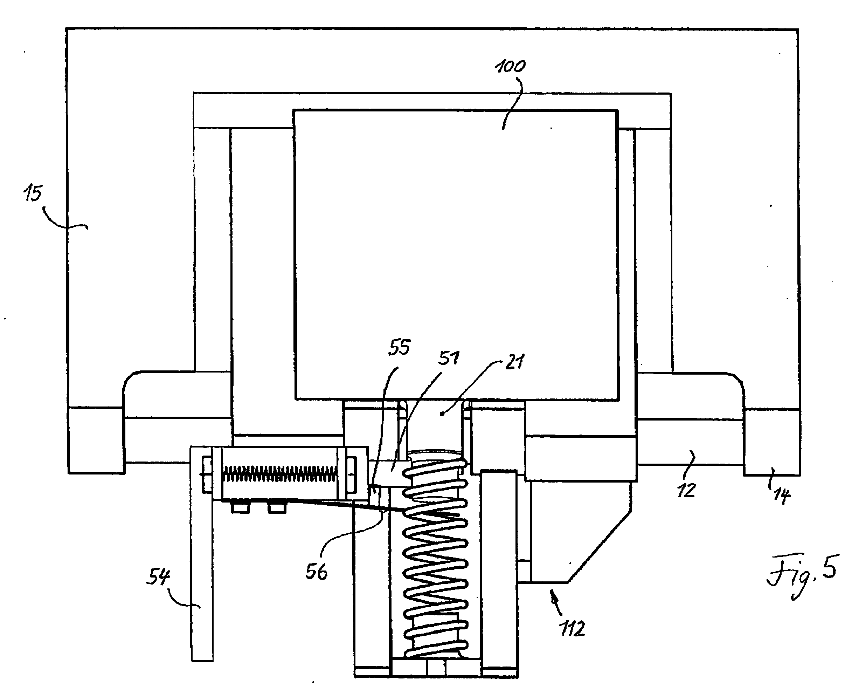

Fig. 5 zeigt eine Draufsicht auf die Verriegelung gemäß der Erfindung mit aufgesetztem Container.
Fig. 6 zeigt im vergrößerten Maßstab den Betätigungshebel einer Verriegelung.
Fig. 7 zeigt eine Darstellung der Verriegelung entsprechend der Fig. 2, jedoch sind einige Teile zum besseren Verständnis der Erfindung weggelassen worden.

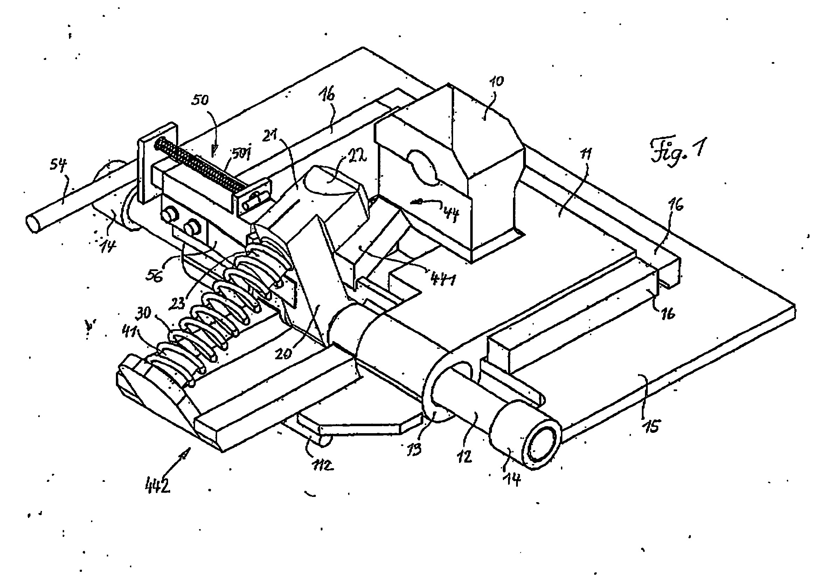

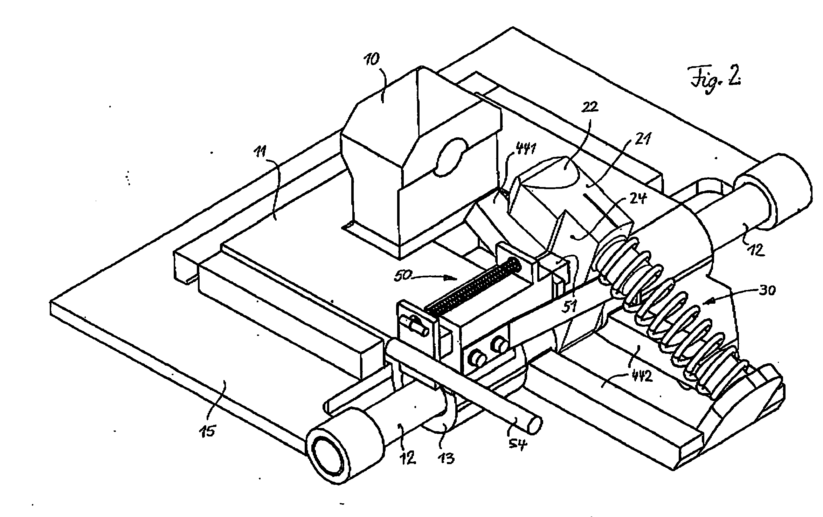

Die Figuren 1 und 2 zeigen eine Basisplatte 15, die auf der Plattform eines Transportfahrzeuges aufruht oder Bestandteil der Transportplattform ist Zur Außenseite des Fahrzeuges hin, ist die Basisplatte 15 mit zwei zueinander fluchtenden hohlzylindrischen Aufnahmeteilen 14 ausgestattet. In diese Aufnehmer 14 kann eine Achse oder ein Schwenkbolzen 12 eingesetzt werden, der die Schwenkbewegung von weiteren Elementen der Verriegelung gemäß der Erfindung ermöglicht.

Eine Schwenkplatte 11 ist mit Hilfe von zwei Durchgängen auf der Schwenkachse 12 verschwenkbar gelagert, wobei die Schwenkplatte 11 in den Figuren in der waagerechten Lage, der Arbeitsposition gezeigt ist. An der Schwenkplatte 11 ist ein Verriegelungspilz 10 in der üblichen Größe befestigt. Der Verriegelungspilz 10 dient dazu, von unten her in den Eckbeschlag eines Containers eingeführt zu werden.

Die bislang beschriebenen Teile sind bei Ausführungsformen von Containerverriegelungen bei Bahntragwagen üblich, wobei die Verschwenkbarkeit der Basisplatte 11 ermöglicht, den Verriegelungspilz 10 aus dem Bereich auf der Plattform des Fahrzeuges herauszuschwenken, nämlich, wenn der entsprechende Verriegelungspilz nicht benötigt wird.

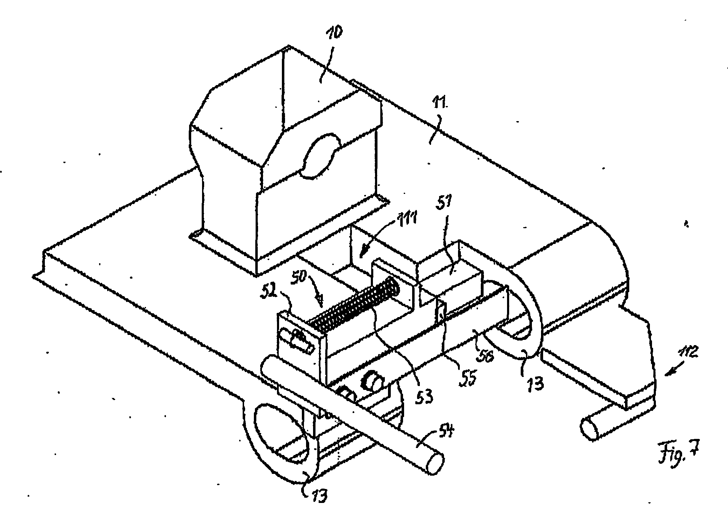

Bei der Verriegelung gemäß der Erfindung ist diese Basisplatte 11 mit einem Ausschnitt 111 versehen, wie dies am besten aus Figur 7 zu erkennen ist.

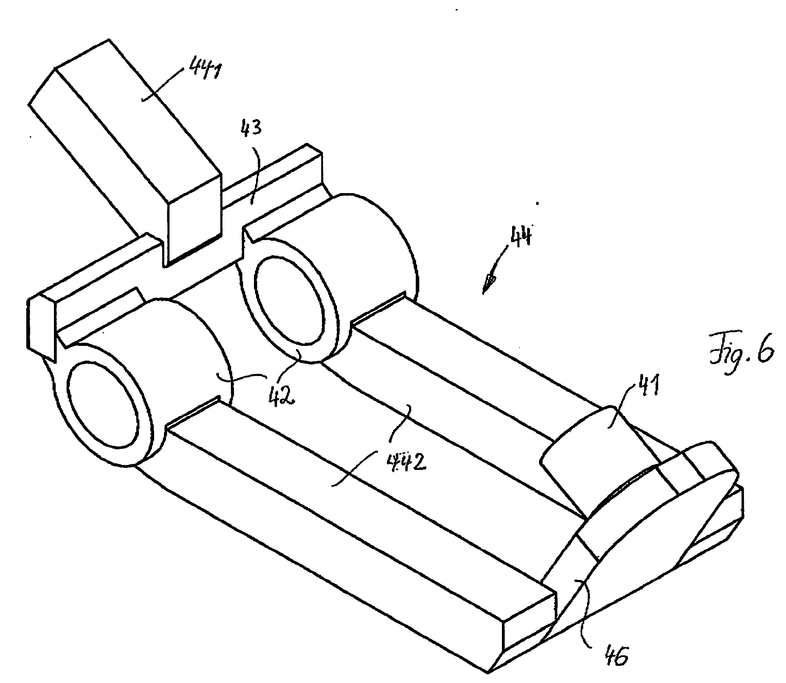

Ein weiterer Teil der Verriegelung gemäß der Erfindung ist auf der Schwenkachse 12 verschwenkbar gehaltert, nämlich ein Betätigungshebel 44, der in Alleinstellung in Figur 6 gezeigt ist. Der Betätigungshebel 44 weist zwei zueinander fluchtende zylinderförmige Ringteile 42 auf, die so bemessen sind, dass die Schwenkachse 12 durch die beiden Ringteile 42 hindurchgeführt werden kann.

Die beiden Ringe 42 sind mit Hilfe eines Verbindungsteiles 43 aneinander befestigt und weisen mittig zu den Ringteilen 42 einen kleinen Hebelteil 441 auf.

Etwa diametral gegenüberliegend zu dem kleineren Hebelarm 441 erstrecken sich zwei Teile, die einerseits an den Ringteilen 42 befestigt sind und andererseits an ihrem freien Ende über ein Verbindungsteil 46 miteinander verbunden sind, so dass sie insgesamt einen großen Hebelarm 442 relativ zum kleinen Hebelarm 441 darstellen. In der Funktionslage nimmt der Betätigungshebel 44 auf Grund der relativen Größe des kleinen und des großen Hebelarmes eine solche Position ein, in der der längere Hebelarm 442 im Wesentlichen waagerecht ausgerichtet ist und an einem Anschlag 112 aufruht (Fig. 1), der an der Basisplatte 15 befestigt ist

Die Figur 6 lässt weiterhin erkennen, dass am freien Ende der beiden Teile des langen Hebelarms 442 ein im wesentlichen zylinderförmiger Vorsprung 41 ausgebildet ist, der zur Aufnahme einer Feder 30 dient, wie sie in Figur 1 zu erkennen ist. Das andere Ende der Feder 30 greift in einen entsprechenden Vorsprung 23 ein, der am freien Ende einer Klaue ausgebildet ist. Die Klaue bzw. deren Schwenkteil 20 ist schwenkbar auf der Schwenkachse 12 gehaltert und kann um die Schwenkachse 12 Schwenkbewegungen ausführen.

Am freien Ende des Schwenkteils 20 der Klaue ist zum Vorsprung 23 gegenüberliegend ein Sperrteil 21 ausgebildet, der seinerseits am freien Ende mit einer Schrägung 22 ausgestattet ist.

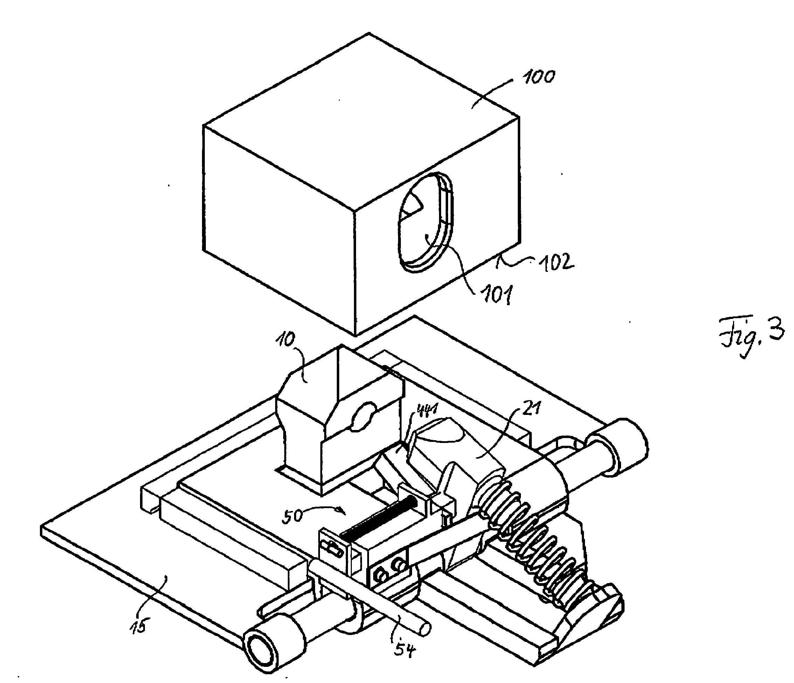

Die beiden frei vorstehenden Enden des kleinen Hebelarms 441 und des Sperrteils 21 ragen in den Aufsetzbereich eines Containers oder genauer gesagt in den Aufsetzbereich eines Eckbeschlages 100 eines Containers hinein, wie dies am besten in Figur 3 zu erkennen ist. In Figur 3 ist ein solcher Eckbeschlag 100 etwas oberhalb der Vorrichtung gemäß der Erfindung gezeigt. Man denke sich diesen Eckbeschlag 100 als festen Bestandteil eines Containers, wobei hier aus Zwecken der Klarheit der Darstellung der Container selbst nicht gezeigt ist. An dieser Stelle sei erwähnt, dass der Sperrteil 21 so ausgebildet ist, dass er in die seitliche Öffnung 101 eines Eckbeschlages eingeführt werden kann. In der eingeführten Position verriegelt dann der Sperrteil 21 den Eckbeschlag 100 bzw. den dazugehörigen Container.

Wenn ein Container auf die Verriegelung gemäß der Erfindung aufgesetzt wird, so gelangt zunächst einmal die untere Kante 102 des Eckbeschlages auf die Abschrägung 22 und auf das freie Ende des kurzen Hebels 441. Unter dem Gewicht des Containers führt dann der Betätigungshebel 44 eine Schwenkbewegung aus, und zwar bei Blickrichtung gemäß Figur 1 im Uhrzeigersinn.

Bevor jedoch die untere Kante 102 das freie Ende des Hebels 441 erreichen kann, trifft die Kante 102 auf die Abschrägung 22 der Klaue. Auf Grund der Schrägung 22 drückt der Container mit seinem Gewicht den Sperrteil 21 nicht nach unten, sondern bei Betrachtung der Figur 1 nach links bzw. die Klaue führt eine Schwenkbewegung im Gegenuhrzeigersinn durch. Der Sperrteil 21 kann diese Bewegung deshalb durchführen, weil die Feder 30 eine solche Schwenkbewegung zulässt. Beim weiteren Absetzen des Containers wird, wie bereits erwähnt, der kleine Hebelarm 441 im Uhrzeigersinn verschwenkt und hierdurch wird eine Kraft über die Feder 30 auf den Sperrteil 21 übertragen, der auf diese Art und Weise an der Seitenwand des Eckbeschlages 100 entlang gleitet und in die Seitenöffnung 101 des Eckbeschlages 100 hineingelangt.

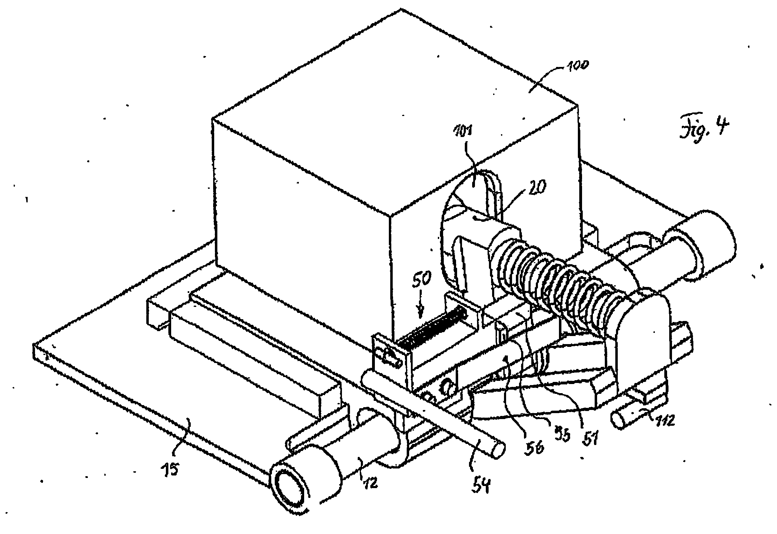

Die Verriegelung befindet sich jetzt in dem in Figur 4 gezeigten Verriegelungszustand, und an und für sich könnte sich der Container aus dieser Verriegelungslage selbst bei höheren mechanischen Beanspruchungen nicht lösen, jedenfalls so lange wie die Klinke bzw. der Sperrteil 21 sich in der Seitenöffnung 101 des Beschlages 100 befindet. Es handelt sich hierbei um eine kraftschlüssige Verbindung unter Einfluss einer Feder 30. Wenn über diese Art der Verriegelung hinausgehend eine Verriegelung gewünscht wird, beispielsweise eine formschlüssige Verbindung, so muss der Sperrteil 21 in seiner verriegelten Lage seinerseits verriegelt werden und die hierzu erforderlichen Elemente werden in der nachfolgenden Beschreibung erläutert.

Die Teile dieser zusätzlichen Verriegelung sind in Figur 7 am besten zu erkennen, weil dort Bereiche der Verriegelung der Erfindung weggelassen worden sind, um die Darstellung zu erleichtern.

An der Basisplatte 11 im Bereich der Schwenkachse 12, jedoch etwas oberhalb befindet sich ein Riegelteil 50, der aus mehreren Elementen besteht In einem kastenförmigen Gehäuse ist in einer Ausnehmung ein hin und her beweglicher Sperrteil 51 vorgesehen, der in der gezeigten Ausführungsform die Form eines Quaders hat. Das andere Ende des Riegelteils 51 ist an einer Platte 52 befestigt, die größer als der Riegelteil 51 und etwa so groß wie die Stirnfläche des Blocks der Verriegelung 50 ist. Auf diese Art und Weise kann der Sperrteil 51 zwar Hin- und Herbewegungen ausführen, in der in Figur 7 gezeigten Position liegt jedoch die Platte 42 als Anschlag fest an dem Gehäuse. Am Gehäuse des Riegelteils 50 ist eine Halterung vorgesehen, die mit der Platte 52 über eine Zugfeder 53 in Verbindung steht Es ist zu erkennen, dass auf diese Arte und Weise der Riegelteil 51 auf Grund der Feder 53, die in Figur 7 gezeigte Lage einnehmen will, d. h. er befindet sich in Bezug auf das Gehäuse des Riegelteils 50 in ausgefahrener Lage.

Außen am Gehäuse des Riegelteils 50 ist das eine Ende einer Blattfeder 56 befestigt, die sich etwa über die Länge des Gehäuses erstreckt und am gegenüberliegenden Ende in Bezug auf die Befestigungsstelle mit einem Sperrteil 55 ausgebildet ist.

Die Blattfeder 56 ist also mit dem Sperrteil 55 fest verbunden und das freie Ende des Sperrteils 55 liegt außen an dem Riegelteil 51 an. Die Blattfeder versucht also den Sperrteil 55 in den Bewegungsweg des Riegelteils 51 hineinzudrücken. In der in Figur 7 gezeigten Lage liegt das freie Ende des Sperrteils 55 außen am Riegelteil 51 an. Wenn hingegen der Sperrteil 51 in das Gehäuse des Riegelteils 50 eingefahren worden ist, kann der Sperrteil 55 auf Grund der Federkraft der Feder 56 bewirken, dass der Riegelteil 51 das Gehäuse nicht verlassen kann.

An der Platte 52 ist außen ein Entriegelungshebel 54 vorgesehen, der beispielsweise von Hand oder mit Hilfe einer anderen ortsfesten Einrichtung, an der sich das Fahrzeug mit der Verriegelung gemäß der Erfindung vorbei bewegt, aus der in Figur 7 gezeigten Lage (der Verriegelungslage) in eine Freigabelage bewegt werden kann. Hierzu muss der Entriegelungshebel 54 bei Blickrichtung gemäß Figur 7 von rechts nach links bewegt werden, so dass auf diese Art und Weise über die Platte 52 der Sperrteil 51 in seine eingefahrene Lage gebracht und mit Hilfe des Sperrteils 55 in dieser Lage gehalten wird.

In Figur 4 ist die Verriegelungslage eines Containers zu erkennen, insbesondere ist dort gezeigt, wie der Sperrteil 51 für eine formschlüssige Verriegelung des Eckbeschlages 100 sorgt. Der Sperrteil 51 liegt nämlich an der Außenfläche des Schwenkteils 20 an und sorgt dafür, dass dieser, die in Figur 4 gezeigte Lage, die Verriegelungslage, nicht verlassen kann.

Soll hingegen ein verriegelter Container in die Entriegelungslage gebracht werden, so wird bei der Betrachtung der Figur 4 der Entriegelungshebel 54 nach links bewegt und der Sperrteil 51 wird in die eingefahrene Lage gebracht, d. h. er wird nach links von der Außenfläche des Betätigungshebels 20 wegbewegt. Wenn ausgehend von dieser Position der Container angehoben wird, so wird der Betätigungshebel 20, bei Betrachtung der Figur 4, im Uhrzeigersinn gegen die Wirkung der Feder 30 verschwenkt. Der Betätigungshebel 20 gibt die Seitenöffnung 101 des Eckbeschlages 100 frei und sowohl die Klaue 20 als auch der Betätigungshebel 44 können auf Grund der Gewichtsverhältnisse in die in den Figuren 1, 2 und 3 gezeigten Positionen zurückfallen.

Der Entriegelungshebel 54 kann als Handgriff ausgebildet sein, er kann aber auch so gestaltet sein, dass er in den Bereich einer fest stehenden, aber höhenverstellbaren Bake hineingelangt, die seitlich am Gleis für ein Bahnfahrzeug angeordnet ist. In der einen Position dieser Bake wird der Hebel 54 nicht berührt und ein vorbeifahrender Container wird nicht von seinem Fahrzeug entriegelt In der Betätigungslage der Bake hingegen wird der Entriegelungshebel 54 mit der Bake in Anschlag gebracht und die formschlüssige Verriegelung des Containers wird aufgehoben. Nach Durchfahren des Bakenbereichs können die Container dem Fahrzeug entnommen werden.

## Patentansprüche

1. Vorrichtung zur Verriegelung eines Containers auf einem Fahrzeug, welches eine Tragplattform (15) mit einer Mehrzahl von an vorgegebenen Stellen angeordneten Verriegelungspilzen (10) aufweist, die beim Aufsetzen eines Containers (100) von unten her in die unteren Langlöcher der Eckbeschläge eindringen, **dadurch gekennzeichnet, dass** jedem Verriegelungspilz (10) zur selbsttätigen Verriegelung folgende Elemente zugeordnet sind:
ein Betätigungshebel (44), der um eine horizontale Achse (12) verschwenkbar und mit einem kurzen Hebelarm (441) und einem etwa diametral gegenüberliegenden langen Hebelarm (442) ausgebildet ist,
der lange Hebelarm (442) in unbelasteter Position des Betätigungshebels (44) im Wesentlichen waagrecht auf einem Anschlag (112) aufruht,
das freie Ende des kurzen Hebelarmes (441) im Aufsetzbereich des Eckbeschlages (100) eines Containers angeordnet und sich unter Belastung durch einen Container waagerecht ausrichtet, und
eine Klaue (22) um die horizontale Achse (12) des Betätigungshebels (44) verschwenkbar und mit einem radial nach oben ragenden Schwenkteil (20) ausgebildet ist, an dessen freiem Ende ein in den Aufsetzbereich des Eckbeschlages (100) des Containers hineinragender Sperrteil (21) ausgebildet ist und an deren dem Sperrteil (21) gegenüberliegender Fläche das eine Ende einer Druckfeder (30) angreift, deren anderes Ende an dem freien Ende des langen Hebelarmes (442) des Betätigungshebels (40) angreift und Relatiwerschwenkungen zwischen dem Betätigungshebel (44) und der Klaue (22) beim Aufsetzen eines Containers (100) zulässt, wobei deren Sperrteil (21) in das seitliche Langloch (101) des Eckbeschlages eindringt und den Container nach dem Aufsetzen auf die Tragplattform verriegelt.

2. Vorrichtung nach Anspruch 1, **gekennzeichnet durch** eine Schwenkplatte (11), an der der Verriegelungspilz (10) befestigt ist und die um die Schwenkachse (12) des Betätigungshebels (44) und der Klaue (22) aus einer waagerechten Position, der Position zur Verriegelung eines Containers, in eine Position außerhalb des Aufsetzbereiches des Containers verschwenkbar angeordnet ist.

3. Vorrichtung nach Anspruch 1 oder 2, **dadurch gekennzeichnet, dass** der Anschlag (112) für den Betätigungshebel (442) an der Schwenkplatte (11) befestigt ist.

4. Vorrichtung nach mindestens einem der Ansprüche 1 bis 3, **dadurch gekennzeichnet, dass** der Sperrteil (21) an seinem freien Ende im oberen Bereich mit einer Abschrägung oder Abrundung (22) für den Gleiteingriff mit der unteren äußeren Kante des Eckbeschlages (100) eines sich in Absetzbewegung befindlichen Containers ausgebildet ist.

5. Vorrichtung nach mindestens einem der Ansprüche 1 bis 4, **dadurch gekennzeichnet, dass** die Druckfeder eine Spiralfeder (30) ist

6. Vorrichtung nach mindestens einem der Ansprüche 1 bis 5, **gekennzeichnet durch** einen Riegelteil (51), der in den Schwenkbewegungsweg des Sperrteiles (21) hinein **durch** eine Feder (53) vorgespannt ist und den Sperrteil (21) in seiner Container-Verriegelungsposition arretiert

7. Vorrichtung nach Anspruch 6, **dadurch gekennzeichnet, dass** der Riegelteil (51) durch einen Entriegelungsteil (54) aus der Verriegelungsposition herausbewegbar ist

8. Vorrichtung nach Anspruch 7, **dadurch gekennzeichnet, dass** der aus der Entriegelungslage heraus bewegte Entriegelungsteil (54) mit Hilfe eines weiteren Sperrteiles (55) blockierbar ist.

9. Vorrichtung nach Anspruch 8, **dadurch gekennzeichnet, dass** der weitere Sperrteil (55) durch eine Blattfeder (56) in seine Sperrposition vorgespannt ist.

10. Vorrichtung nach Anspruch 9, **dadurch gekennzeichnet, dass** das freie Ende der Blattfeder (56) an dem Schwenkteil (20) der Klaue anschlägt.

## Claims

1. A device for locking a container on a vehicle having a supporting platform (15) with a plurality of locking mushrooms (10), arranged at predetermined sites, which penetrate from below into the lower elongated holes of the corner fittings upon setting down of a container (100), **characterised in that** for the purpose of automatic locking, the following elements are associated with each locking mushroom (10):
an actuating lever (44), which is pivotable about a horizontal axle (12) and which has a short lever arm (441) and a long lever arm (442) approximately diametrically opposite the latter,
the long lever arm (442) rests substantially horizontally on a stop (112) in the unloaded position of the actuating lever (44),
the free end of the short lever arm (441) [is] arranged In the set down region of the corner fitting (100) of a container and is directed horizontally when loaded by a container, and
a driver (22) is pivotable about the horizontal axle (12) of the actuating lever (44) and has a radially upwards projecting pivoting part (20) at the free end of which there is a blocking part (21) projecting into the set down region of the corner fitting (100) of the container and whose surface facing the blocking part (21) is engaged by one end of a pressure spring (30) whose other end engages the free end of the long lever arm (442) of the actuating lever (44) and permits relative pivoting movements between the actuating lever (44) and the driver (22) upon setting down of a container (100), wherein its blocking part (21) penetrates the lateral elongated hole (101) of the corner fitting and locks the container after setting down upon the supporting platform.

2. A device according to claim 1, **characterised by** a pivoting plate (11) to which the locking mushroom (10) is secured and which is arranged so as to be pivotable about the pivot axis (12) of the actuating lever (44) and of the driver (22) from a horizontal position, the position for locking a container, into a position exterior to the set down region of the container.

3. A device according to claim 1 or 2, **characterised in that** the stop (112) for the actuating lever (442) is secured to the pivoting plate (11).

4. A device according to at least one of claims 1 to 3, **characterised in that** the upper region of the free end of the blocking part (21) has a bevel or rounded portion (22) for sliding engagement with the lower, outer edge of the corner fitting (100) of a container located in setting down motion.

5. A device according to at least one of claims 1 to 4, **characterised in that** the pressure spring is a coil spring (30).

6. A device according to at least one of claims 1 to 5, **characterised by** a locking part (51) which is pretensioned into the pivoting motion path of the blocking part (21) by a spring (53) and which arrests the blocking part (21) in its container locking position.

7. A device according to claim 6, **characterised in that** the locking part (51) can be moved out of the locking position by an unlocking part (54).

8. A device according to claim 7, **characterised in that** the unlocking part (54) moved out of the unlocking position can be blocked with the aid of another blocking part (55).

9. A device according to claim 8, **characterised in that** the additional blocking part (55) is pretensioned into its blocking position by a leaf spring (56).

10. A device according to claim 9, **characterised in that** the free end of the leaf spring (56) strikes the pivoting part (20) of the driver.

## Revendications

1. Dispositif pour verrouiller un conteneur sur un véhicule, lequel dispositif comporte une plate-forme support (15) avec une pluralité de tétons de verrouillage (10) disposés à des emplacements prédéfinis et s'engageant par le bas dans les trous oblongs inférieurs des ferrures d'angle au moment de la mise en place d'un conteneur (100), **caractérisé en ce que** les éléments suivants sont associés à chaque téton de verrouillage (10) pour permettre un verrouillage automatique:
un levier de manoeuvre (44) pouvant pivoter autour d'un axe horizontal (12) et configuré avec un bras de levier court (441) et un bras de levier long (442) disposé sensiblement diamétralement à l'opposé,
le bras de levier long (442), dans la position non sollicitée du levier de manoeuvre (44), repose sensiblement horizontalement sur une butée (112),
l'extrémité libre du bras de levier court (441) est disposée dans la zone de pose de la ferrure d'angle (100) d'un conteneur et s'oriente horizontalement sous l'effet de la charge d'un conteneur, et
une mâchoire (22), pouvant pivoter autour de l'axe horizontal (12) du levier de manoeuvre (44) et formée avec une partie pivotante (20) se dressant radialement vers le haut, à l'extrémité libre de laquelle est réalisée une partie de blocage (21) s'engageant dans la zone de pose de la ferrure d'angle (100) du conteneur et sur la surface de laquelle, opposée à la partie de blocage (21), agit l'une des extrémités d'un ressort de pression (30) dont l'autre extrémité agit sur l'extrémité libre du bras de levier long (442) du levier de manoeuvre (44) et autorise des pivotements relatifs entre le levier de manoeuvre (44) et la mâchoire (22) au moment de la mise en place d'un conteneur (100), ladite partie de blocage (21) pénétrant dans le trou oblong (101) latéral de la ferrure d'angle et verrouillant le conteneur sur la plate-forme support après sa mise en place.

2. Dispositif selon la revendication 1, **caractérisé par** une plaque pivotante (11), sur laquelle est fixé le téton de verrouillage (10) et qui est disposée pour pouvoir pivoter autour de l'axe de pivotement (12) du levier de manoeuvre (44) et de la mâchoire (22) depuis une position horizontale, à savoir la position de verrouillage d'un conteneur, dans une position en dehors de la zone de pose du conteneur.

3. Dispositif selon la revendication 1 ou 2, **caractérisé en ce que** la butée (112) pour le levier de manoeuvre (44) est fixée sur la plaque pivotante (11).

4. Dispositif selon au moins l'une des revendications 1 à 3, **caractérisé en ce que** la partie de blocage (21), dans la zone supérieure de son extrémité libre, est configurée avec un chanfrein ou un arrondi (22) pour l'engagement par glissement d'un bord extérieur inférieur de la ferrure d'angle (100) d'un conteneur effectuant un mouvement de mise en place.

5. Dispositif selon au moins l'une des revendications 1 à 4, **caractérisé en ce que** le ressort de pression est un ressort spirale (30).

6. Dispositif selon au moins l'une des revendications 1 à 5, **caractérisé par** un verrou (51) qui est précontraint par un ressort (53) dans la trajectoire de pivotement de la partie de blocage (21) et immobilise la partie de blocage (21) dans sa position de verrouillage du conteneur.

7. Dispositif selon la revendication 6, **caractérisé en ce que** le verrou (51) peut être amené hors de sa position de verrouillage par un élément de déverrouillage (54).

8. Dispositif selon la revendication 7, **caractérisé en ce que** l'élément de déverrouillage (54), amené hors de la position de déverrouillage, peut être bloqué au moyen d'un élément de blocage supplémentaire (55).

9. Dispositif selon la revendication 8, **caractérisé en ce que** l'élément de blocage supplémentaire (55) est précontraint par un ressort à lame (56) dans sa position de blocage.

10. Dispositif selon la revendication 9, **caractérisé en ce que** l'extrémité libre du ressort à lame (56) vient buter contre la partie pivotante (20) de la mâchoire.
